# EUROPÄISCHE PATENTSCHRIFT

(11) **EP 0 594 056 B1**
(45) Veröffentlichungstag und Bekanntmachung des Hinweises auf die Patenterteilung: **15.04.1998**
(21) Anmeldenummer: 93116602.9
(22) Anmeldetag: 14.10.1993
(51) Int. Cl.: C08F 265/04, C08F 279/02

(54) **Thermoplastische Formmasse**
Thermoplastic moulding composition
Masse à mouler thermoplastique

(30) Priorität: 24.10.1992 DE 4235976
(43) Veröffentlichungstag der Anmeldung: 27.04.1994
(73) Patentinhaber: BASF Aktiengesellschaft, 67063 Ludwigshafen (DE)
(72) Erfinder: Fischer, Wolfgang, Dr., D-67067 Ludwigshafen (DE); Guentherberg, Norbert, Dr., D-67346 Speyer (DE); Niessner, Norbert, Dr., D-67159 Friedelsheim (DE)

(56) Entgegenhaltungen:
- EP-A- 0 450 511
- EP-A- 0 494 534

## Beschreibung

Die Erfindung betrifft teilchenförmige Pfropfcopolymerisate sowie aus diesen hergestellte matte thermoplastische Formmassen mit verbesserter Zähigkeit.

### Stand der Technik

Die Herstellung teilchenförmiger Pfropfpolymerisate aus einem kautschukelastischen Kern, d.h. einem Polymeren mit einer Glasübergangstemperatur von unter 0 °C und einer Pfropfhülle ist bekannt. Hierzu wird zunächst z.B. durch Emulsionspolymerisation geeigneter Monomerer eine Pfropfgrundlage hergestellt. Die Monomeren, die die Pfropfhülle bilden sollen, werden dann in Gegenwart der Pfropfgrundlage so polymerisiert, daß ein möglichst hoher Anteil auf die Pfropfgrundlage aufgepfropft wird. Die teilchenförmigen Pfropfpolymerisate werden zur Verbesserung der Schlagzähigkeit an sich spröder, schlagempfindlicher Thermoplasten verwendet. Dabei werden die Monomeren für die Pfropfhülle so gewählt, daß die daraus gebildeten Polymeräste mit dem zu modifizierenden Thermoplasten verträglich sind. Die Herstellung sogenannter Schlagzähmodifier ist seit langem bekannt und z.B. in der US-PS 30 55 859 und der DE-PS 12 60 135 beschrieben.

Ein Hauptproblem bei der Herstellung solcher teilchenförmiger Pfropfpolymerisate ist die Anbindung der Pfropfhülle an die Pfropfgrundlage. Bei schlechter Anbindung ist die schlagzähmodifizierende Wirkung nicht ausreichend, so daß nur Produkte mit verminderter Zähigkeit erhalten werden können. Zur Verbesserung der Anbindung wurden eine Reihe von Maßnahmen vorgeschlagen. DE 40 11 163 beschreibt eine Verbesserung der Anbindung, wenn als Pfropfgrundlage ein Polymerisat verwendet wird, das ein saure enthaltendes Monomere einpolymerisiert enthält und auf das als Pfropfhülle ein basische Gruppen enthaltendes Monomere aufgepfropft wird. Als weitere Möglichkeit wird in EP 0 445 601 der Einsatz von Hydroxalkylacrylat oder -methacrylat in der Pfropfgrundlage beschrieben.

Es wurde nun gefunden, daß die Anbindung der Pfropfhülle an die Pfropfgrundlage deutlich verbessert werden kann, wenn man zusätzlich zu den sauren Monomeren in der Pfropfgrundlage und den basischen Monomeren in der Pfropfhülle 0,1 bis 20 Gew.-% eines Hydroxyalkylacrylats oder -methacrylats in die Pfropfhülle einpolymerisiert. Es besteht die Vorstellung (die jedoch die Erfindung nicht begrenzen soll), daß es dabei zu Ester-Verknüpfungen kommt, die zu einer besseren Anbindung der Pfropfhülle an die Pfropfgrundlage und somit zu einer Verbesserung der Zähigkeit führt. Formmassen mit dem erfindungsgemäßen Pfropfkautschuk führen zu matten Produkten mit sehr guter Zähigkeit; die Pfropfkautschuke dienen daher auch als Mattierungsmittel.

Unmittelbarer Erfindungsgegenstand ist ein teilchenförmiges Pfropfcopolymerisat aus einer Pfropfgrundlage A aus, bezogen auf A,
- A11:: 75 bis 99.8 Gew.-% mindestens eines Alkylacrylats A11 mit 1-8 C-Atomen im Alkylrest,
- A12:: 0,1 bis 5 Gew.-% mindestens eines polyfunktionellen, vernetzend wirkenden Monomeren A12,
- A13:: 0,1 bis 20 Gew.-% mindestens eines eine oder mehrere saure Gruppen enthaltenden Monomeren A13
oder
- A111:: mindestens 50 Gew.-% eines oder mehrerer Diene A111,
- A112:: bis zu 50 Gew.-% mindestens eines weiteren ethylenisch ungesättigten Monomeren A112,
- A113:: bis zu 15 Gew.-% mindestens eines eine oder mehrere saure Gruppen enthaltenden Monomeren A113
und einer darauf gepfropften Pfropfhülle B, aufgebaut aus, bezogen auf B
- B1:: 0 bis 99,8 Gew.-% mindestens eines vinylaromatischen Monomeren
- B2:: 0 bis 99,8 Gew.-% mindestens eines polaren, copolymerisierbaren, ethylenisch ungesättigten Monomeren B2,
- B3:: 0,1 bis 20 Gew-% mindestens eine oder mehrere basische Gruppen enthaltenden Monomeren B3 und
- B4:: 0,1 bis 20 Gew.-% mindestens eines Hydroxyalkylacrylats oder -methacrylats B4.

Die Erfindung betrifft weiterhin eine Formmasse, die im wesentlichen aus 1 bis 50 Gew.-% des vorstehenden teilchenförmigen Pfrofpolymerisats und 50 bis 99 Gew.-% mindestens eines Polymeren mit einer Glasübergangstemperatur von mehr als 25 °C als Matrix besteht und im allgemeinen noch untergeordnete Mengen an üblichen Zusatz- und Hilfsstoffen enthält.

Das Pfropfcopolymerisat ist z.B. aufgebaut aus:

| | | | |
|---|---|---|---|
| A: | | 30 - 80 Gew.-% | |
| | bevorzugt | 35 - 80 Gew.-% | |
| | besonders bevorzugt | 35 - 75 Gew.-% | (bezogen auf A+B) |
| A 11: | | 75 - 99,8 Gew.-% | |
| | bevorzugt | 80 - 99,7 Gew.-% | |
| | besonders bevorzugt | 85 - 99,7 Gew.-% | (bezogen auf A) |
| A 12: | | 0,1 - 5,0 Gew.-% | |
| | bevorzugt | 0,1 - 4,5 Gew.-% | |
| | besonders bevorzugt | 0,1 - 4,0 Gew.-% | (bezogen auf A) |
| A 13: | | 0,1 - 20,0 Gew.-% | |
| | bevorzugt | 0,2 - 15,5 Gew.-% | |
| | besonders bevorzugt | 0,2 - 11,0 Gew.-% | (bezogen auf A) |
| A 111: | | mind. 50 Gew.-% | |
| | bevorzugt | mind. 75 Gew.-% | |
| | besonders bevorzugt | mind. 92 Gew.-% | (bezogen auf A) |
| A 112: | | 0 - 50 Gew.-% | |
| | bevorzugt | 0 - 25 Gew.-% | |
| | besonders bevorzugt | 0 Gew.-% | (bezogen auf A) |
| A 113: | | 0 - 15 Gew.-% | |
| | bevorzugt | 0,2 - 10 Gew.-% | |
| | besonders bevorzugt | 0,2 - 8 Gew.-% | (bezogen auf A) |
| B: | | 20 - 70 Gew.-% | |
| | bevorzugt | 20 - 65 Gew.-% | |
| | besonders bevorzugt | 25 - 65 Gew.-% | (bezogen auf A+B) |
| B1: | | 0 - 99,8 Gew.-% | |
| | bevorzugt | 0 - 99,7 Gew.-% | |
| | besonders bevorzugt | 0 - 99,5 Gew.-% | (bezogen auf B) |
| B2: | | 0 - 99,8 Gew.-% | |
| | bevorzugt | 0 - 99,5 Gew.-% | |
| | besonders bevorzugt | 0 - 99,0 Gew.-% | (bezogen auf B) |
| B1+B2: | | 60 - 99,8 Gew.-% | |
| | bevorzugt | 70 - 99,5 Gew.-% | |
| | besonders bevorzugt | 85 - 99,0 Gew.-% | (bezogen auf B) |
| B3: | | 0,1 - 20 Gew.-% | |
| | bevorzugt | 0,25 - 15 Gew.-% | |
| | besonders bevorzugt | 0,5 - 7,5 Gew.-% | (bezogen auf B) |
| B4: | | 0,1 - 20 Gew.-% | |
| | bevorzugt | 0,25 - 15 Gew.-% | |
| | besonders bevorzugt | 0,5 - 7,5 Gew.-% | (bezogen auf B) |

Ein geeignetes Verfahren zur Herstellung von Formmassen mit matten Oberflächen besteht weiterhin darin, daß man schlagzäh modifizierten Thermoplasten, beispielsweise ABS, ASA, schlagzähem Polymethylmethacrylat, schlagzähem Polystyrol (HIPS), Polycarbonat/ABS, Polycarbonat/ASA, Polyphenylenether/HIPS, schlagzähem PVC sowie deren Mischungen untereinander 1 bis 50 Gew.-% des erfindungsgemäßen teilchenförmigen Pfropfpolymerisats zusetzt.

Grundsätzlich eignen sich die erfindungsgemäßen teilchenförmigen Pfropfpolymeren auch dazu, z.B. die Klasse der Polycarbonate, Polyestercarbonate, Polyester, Polyamide, Polyphenylenether, Polyetherketone, Polyethersulfone, Polysulfone, Polyoxyalkylene, Polyarylsulfide sowie deren Mischungen untereinander zu mattieren.

Gegenstand der Erfindung sind somit teilchenformige Pfropfpolymerisate der vorstehenden, herstellungsbedingten Zusammensetzung sowie unter Verwendung solcher Pfropfpolymerisate hergestellte thermoplastische Formmassen. Über die erfindungsgemäßen teilchenförmigen Pfropfcopolymerisate, ihre Bestandteile und ihre Herstellung ist im einzelnen das folgende zu sagen:

Die teilchenförmigen Pfropfpolymerisate werden aus einer Pfropfgrundlage (Kautschuk) A und einer Pfropfhülle B in an sich bekannter Weise erhalten. Als Kautschuk A dient entweder ein vernetztes Acrylsäureester-Polymerisat oder ein Diencopolymerisat mit einer Glasübergangstemperatur unter 0°C, bevorzugt unter -20°C.

Als Monomere All kommen Acrylsäureester mit 1 bis 8 Kohlenstoffatomen, mindestens teilweise solche mit 4 bis 8 Kohlenstoffatomen, im Alkylrest in Betracht. Als geeignet seien besonders Acrylsäure-n-butylester und Acrylsäureethylhexylester genannt.

Die Acrylsäurester können jeweils allein oder auch in Mischung miteinander eingesetzt werden.

Zur Erzielung guter mechanischer Eigenschaften hat es sich als notwendig erwiesen, daß das als Pfropfgrundlage verwendete Acrylsäurester-Polymerisat vernetzt ist. Hierzu wird die Polymerisation der Acrylsäureester in Gegenwart von 0,1 bis 5 Gew.-%, bezogen auf das Gesamtgewicht der bei der Herstellung der Pfropfgrundlage eingesetzten Monomeren, eines copolymerisierbaren, polyfunktionellen, die Vernetzung bewirkenden Monomeren A12 durchgeführt. Es eignen sich Monomere, die mindestens zwei zur Copolymerisation befähigte ethylenische Doppelbindungen enthalten, die nicht in 1,3-Stellung konjugiert sind. Beispiele sind Divinylbenzol, Diallylmaleat, Diallylfumarat, Diallylphthalat, Allylmethacrylat, Triallylcyanurat oder Triallylisocyanurat. Als besonders günstiges Vernetzungsmonomeres hat sich der Acrylsäureester des Tricyclodecenylalkohols erwiesen (vgl. DE-PS 1260135).

Zur Verbesserung der Anbindung der Pfropfhülle an die Pfropfgrundlage enthält das zur Herstellung der Pfropfgrundlage verwendete Monomerengemisch des weiteren noch 0,1 bis 20 Gew.-% eines oder mehrerer copolymerisierbarer Monomere, die eine oder mehrere saure Gruppen enthalten (A13) bzw. (A113). Als saure Gruppen kommen insbesondere Carbonsäure-, Sulfonsäure- oder Phosphorsäuregruppen in Frage. Bevorzugte saure Monomere sind alpha beta ungesättigte Carbonsäuren wie Acrylsäure oder Methacrylsäure, ferner Citraconsäure, Crotonsäure, Fumarsäure, Itaconsäure, Maleinsäure, Vinylsulfonsäure, Vinylbenzolsulfonsaure, Vinylphosphorsäuren oder Zimtsäure.

Die Herstellung des Pfropfmischpolymerisats kann nach der in der DE-PS 12 60 135 beschriebenen Methode erfolgen. Hierzu wird zunächst die Pfropfgrundlage A hergestellt; wenn die Pfropfgrundlage ein Acrylatkautschuk sein soll, wird der oder die Acrylsäureester All, das polyfunktionelle Monomere A12 und das erfindungsgemäße saure Monomere A13 in wäßriger Emulsion bei 20 bis 100°C, bevorzugt zwischen 50 und 80°C polymerisiert. Es können die üblichen Emulgatoren wie die Alkalisalze von Alkyl- oder Alkylarylsulfonsäuren, Alkylsulfate, Fettalkoholsulfonate, Salze höherer Fettsäuren mit 10 bis 30 Kohlenstoffatomen oder Harzseifen verwendet werden. Vorzugsweise nimmt man die Natriumsalze von Alkylsulfonaten oder von Fettsäuren mit 10 bis 18 Kohlenstoffatomen. Es ist günstig, die Emulgatoren in einer Menge von 0,5 bis 5 Gew.-%, insbesondere von 1 bis 2 Gew.-%, bezogen auf das Gesamtgewicht der für die Herstellung der Pfropfgrundlage verwendeten Monomeren, einzusetzen. Im allgemeinen wird bei einem Wasser/Monomer-Verhältnis von 2:1 bis 0,7:1 gearbeitet. Als Polymerisationsiniatoren dienen insbesondere die gebräuchlichen Persulfate, wie z.B. Kaliumperoxodisulfat; es sind jedoch auch Redoxsysteme geeignet. Die Menge an Initiatoren (z.B. 0,1 bis 1 Gew.-%, bezogen auf das Gesamtgewicht der Monomeren) richtet sich in bekannter Weise nach dem gewünschten Molgewicht.

Als Polymerisationshilfsstoffe können die üblichen Puffersubstanzen, durch welche pH-Werte von vorzugsweise 6 bis 9 eingestellt werden, z.B. Natriumbicarbonat und Natriumpyrophosphat, sowie bis zu 3 Gew.-% eines Molekulargewichtsreglers, wie Mercaptan, Terpinol oder dimeres alpha-Methylstyrol verwendet werden.

Die genauen Polymerisationsbedingungen, insbesondere Art, Dosierung und Menge des Emulgators werden innerhalb der oben angegebenen Bereiche so bestimmt, daß der erhaltene Latex des vernetzten Acrylsäureester-Polymerisats einen d₅₀-Wert im Bereich von etwa 30 bis 1000 nm, bevorzugt im Bereich von 50 bis 800 nm besitzt.

Wenn der Pfropfkern ein Dienkautschuk sein soll, wird zweckmäßig wie folgt verfahren: Das Elastomer, die Pfropfgrundlage A wird hergestellt, indem Alll allein, gegebenenfalls zusammen mit den weiteren Comonomeren in wäßriger Emulsion in an sich bekannter Weise bei Temperaturen von 20 bis 100 °C, vorzugsweise von 50 bis 80°C, polymerisiert werden. Es können die üblichen Emulgatoren, wie Alkalisalze von Alkyl-oder Alkylarylsulfonsauren , Alkylsulfate, Fettalkoholsulfonate, Salze höherer Fettsäuren mit 10 bis 30 Kohlenstoffatomen oder Harzseifen, verwendet werden. Vorzugsweise nimmt man die Natrium- oder Kaliumsalze von Alkylsulfonaten oder Fettsäuren mit 10 bis 18 Kohlenstoffatomen. Es ist günstig, die Emulgatoren in Mengen von 0,5 bis 5 Gew.-%, insbesondere von 0,5 bis 2 Gew.-%, bezogen auf die bei der Herstellung der Pfropfgrundlage A eingesetzten Monomeren, einzusetzen. Im allgemeinen wird bei einem Wasser- und Monomerenverhältnis von 2:1 bis 0,7:1 gearbeitet. Als Polymerisationsiniatoren dienen insbesondere die gebräuchlichen Persulfate, wie Kaliumpersulfat, es können jedoch auch Redox-Systeme zum Einsatz gelangen. Die Initiatoren werden im allgemeinen in Mengen von 0,1 bis 1 Gew.-%, bezogen auf die bei der Herstellung der Pfropfgrundlage A eingesetzten Monomeren, eingesetzt. Als weitere Polymerisationsstoffe können die üblichen Puffersubstanzen, durch welche pH-Werte von vorzugsweise 6 bis 9 eingestellt werden - z.B. Natriumbicarbonat und Natriumpyrophosphate dienen; ferner können in der Regel 0,1 bis 3 Gew.-% eines Molekulargewichtsreglers- wie Mercaptane, Terpinole oder dimeres alpha-Methylstyrol - bei der Polymerisation verwendet werden.

Die genauen Polymerisationsbedingungen, insbesondere Art, Dosierung und Menge des Emulgators, werden innerhalb der oben angegebenen Bereiche im einzelnen so gewählt, daß der erhaltene Latex des Polymerisats A einen dso-Wert im Bereich von etwa 100 bis 750 nm, vorzugsweise im Bereich von 100 bis 600 nm, besitzt. Oder aber das Emulsionspolymerisat mit mittleren Teilchengrößen im Bereich von 60 bis 150 nm wird in bekannter Weise agglomeriert (vgl. DE-AS 24 27 960).

Zur Aufbringung der Pfropfhülle B, d.h. zur Herstellung des Pfropfmischpolymerisates aus Kern und Pfropfhülle wird in Gegenwart des erhaltenen Latex A ein Monomerengemisch aus bis 99,8 Gew.-% mindestens eines vinylaromatischen Monomeren B1, und/ oder bis 99,8 Gew.-% mindestens eines polaren, copolymerisierbaren Monomeren B2 und 0,1 bis 20 Gew.-% mindestens eines basischen Monomeren B3 polymerisiert. Beispiel für vinylaromatische Monomere sind Styrol, alpha-Methylstyrol und kernalkylierte Styrole wie p-Methylstyrol und ter.-Butylstyrol. Besonders bevorzugt werden Styrol, alpha-Methylstyrol und p-Methylstyrol eingesetzt. Beispiele für polare, copolymerisierbare, ethylenisch ungesättigte Monomere B2 sind Acrylnitril, Methacrylnitril, AcrylsäureMethacrylsäurealkylester mit 1 bis 4 Kohlenstoffatomen im Alkylrest. Bevorzugt werden Alkylnitril, Methylmethacrylat und Gemische derselben. Geeignete Monomere B3 sind mit B1 und B2 copolymerisierbare Monomere mit einer oder mehreren basischen Gruppen. Bevorzugte Monomere enthalten im Molekül eine tertiäre Aminogruppe. Hier seien als Beispiele genannt: Dimethylaminoethyl (meth)acrylat, Morpholinmethacrylat, N-Vinylimidazol, p-Dimethylaminostyrol, N-Vinylcarbazol, N-Vinylindol, N-Vinylpyrrol, 4-Vinylpyrimidin, 2-Vinylpyridin, 3-Vinylpyridin, 4-Vinylpyridin sowie deren Gemische. Besonders bevorzugte Monomere sind Ester der Acrylsäure oder Methacrylsäure mit aliphatischen Alkoholen, die im Alkylrest eine tertiäre Aminogruppe enthalten.

Zur Verbesserung der Anbindung der Pfropfhülle an die Pfropfgrundlage enthält das zur Herstellung der Pfropfhülle verwendete Monomerengemisch erfindungsgemäß noch 0,1 bis 10 Gew.-%, bevorzugt 0,5 bis 5 Gew.-% eines oder mehrerer Hydroxyalkylacrylate oder -methacrylate B4. Geeignete Hydroxyalkylacrylate bzw. -methacrylate sind Ester der Acrylsäure bzw. Methacrylsäure mit mehrwertigen Alkoholen. Besonders bevorzugte Hydroxyalkylacrylate enthalten 2 bis 6 Kohlenstoffatome im Alkylrest, wie z.B. 2-Hydroxyethylacrylat, 2-Hydroxyethylmethacrylat und 4-Hydroxybutylacrylat.

Es ist vorteilhaft, die Pfropfmischpolymerisation auf das als Pfropfgrundlage A dienende Polymerisat wiederum in wäßriger Emulsion durchzuführen. Sie kann im gleichen System wie die Polymerisation der Pfropfgrundlage vorgenommen werden, wobei weiterer Emulgator und Initiator zugegeben werden kann. Diese müssen mit den zur Herstellung der Pfropfgrundlage A verwendeten Emulgatoren bzw. Initiatoren nicht identisch sein. So kann es z.B. zweckmäßig sein, als Initiator für die Herstellung der Pfropfgrundlage A ein Persulfat zu verwenden, zur Polymerisation der Pfropfhülle B jedoch ein Redoxinitiatorsystem einzusetzen. Im übrigen gilt für die Wahl von Emulgator, Initiator und Polymerisationshilfsstoffen das bei der Herstellung der Pfropfgrundlage A gesagte. Das aufzupfropfende Monomerengemisch kann dem Reaktionsgemisch auf einmal, absatzweise in mehreren Stufen oder vorzugsweise kontinuierlich während der Polymerisation zugegeben werden. Die Pfropfmischpolymerisation wird so gesteuert, daß ein Pfropfgrad von 10 bis 60 Gew.-%, vorzugsweise von 15 bis 45 Gew.-%, resultiert.

Die erfindungsgemäßen teilchenförmigen Pfropfpolymerisate können für sich allein als Formmassen verwendet werden. Hierzu können sie z.B. durch Sprühtrocknung aufgearbeitet werden. Bevorzugt werden die teilchenförmigen Pfropfpolymerisate jedoch zur Abmischung mit einem Thermoplasten verwendet, um dessen Schlagzähigkeit zu erhöhen. Zur Modifizierung geeignete Thermoplaste haben Glasübergangstemperaturen über 25°C, bevorzugt über 60°C. Sie werden im folgenden auch als Hartkomponente (Matrix) bezeichnet. Beispiele für geeignete Hartkomponenten sind Polyvinylchlorid, Polymethylmethacrylat sowie insbesondere Copolymere aus einem vinylaromatischen Monomeren und einem polaren, copolymerisierbaren, ethylenisch ungesättigten Monomeren. Geeignete vinylaromatische sowie polare, copolymerisierbare, ethylenisch ungesättigte Monomere sind auch hier die bei der Herstellung der Pfropfhülle als B1 und B2 genannten. Besonders bevorzugte Hartkomponenten sind Styrol-Acrylnitril und alpha-Methylstyrol-Acrylnitril-Copolymere. Die Einarbeitung der erfindungsgemäßen teilchenförmigen Pfropfpolymerisate kann z.B. dadurch erfolgen, daß das teilchenförmige Pfropfpolymerisat durch Zugabe eines Elektrolyten aus der Emulsion isoliert, entwässert und durch gemeinsames Extrudieren, Kneten oder Walzen mit der Hartkomponente vermischt wird.

Die erfindungsgemäßen thermoplastischen Formmassen kannen als weitere Bestandteile Zusatzstoffe enthalten, wie sie für thermoplastische Formmassen üblich sind. Als solche seien beispielsweise genannt: Füllstoffe, weitere verträgliche Kunststoffe, Antistatika, Antioxidantien, Flammschutzmittel, Schmiermittel, Farbstoffe und Pigmente. Die Zusatzstoffe werden in üblichen Mengen, vorzugsweise in Mengen von bis zu 30 Gew.-%, bezogen auf das Gesamtgewicht der thermoplastischen Formmasse, eingesetzt. Verträgliche Kunststoffe können auch einen höheren Anteil ausmachen.

Die erfindungsgemäßen Massen lassen sich nach den für die Thermoplastverarbeitung üblichen Verfahren, wie z.B. Extrusion und Spritzgießen, zu den verschiedenartigsten Formkörpern, wie z.B. Fensterprofilen, Gartenmöbeln, Booten, Schildern, Haushaltsgeräten, Lampenabdeckungen, Automobilteilen und Kinderspielzeug verarbeiten. Die erfindungsgemäßen Massen eignen sich besonders zur Herstellung von Formkörpern, bei denen eine hohe Schlagzähigkeit gefordert ist.

Die in den Beispielen enthaltenen Mengenangaben in Teilen und Prozenten beziehen sich, soweit nicht anders angegeben, auf das Gewicht.

### Beispiele

1. Herstellung der Pfropfgrundlage A
a) Die jeweilige Pfropfgrundlage auf Acrylesterbasis (All, A12, A13) wurde nach folgender allgemeiner Vorschrift hergestellt:
   160 g des in Tabelle 1 zur Herstellung der Pfropfgrundlage A angegebenen Monomerengemische wurden in 1500 g Wasser unter Zusatz von 5g des Natriumsalzes einer C₁₂-bis C₁₈-Paraffinsulfonsäure, 3 g Kaliumperoxodisulfat, 3 g Natriumhydrogencarbonat und 1,5 g Natriumpyrophosphat unter Rühren auf 60 °C erwärmt. 10 Minuten nach dem Anspringen der Polymerisationsreaktion wurden innerhalb von 3 Stunden weitere 840 g der in Tabelle 1 angegebenen Mischung zugegeben. Nach Beendigung der Monomerzugabe wurde die Emulsion noch eine Stunde bei 60 °C gehalten.
b) Die jeweilige Pfropfgrundlage auf Butadienbasis (Alll, A112, A113) wurde nach folgender Vorschrift hergestellt:
   Durch Polymerisation von 600 g Butadien bzw. der in Tabelle 2 angegebenen Mischung A der Pfropfgrundlage in Gegenwart einer Lösung von 6 g tert.-Dodecylmercaptan, 7 g C₁₄-Na-Alkylsulfonat als Emulgator, 2 g Kaliumperoxodisulfat und 2 g Natriumpyrophosphat in 800 ml Wasser wurde bei 65°C ein Polybutadienlatex hergestellt. Der Umsatz betrug 98 %. Es wurde ein Latex erhalten, dessen mittlere Teilchengröße bei 100 nm liegt. Der erhaltene Latex wurde durch Zusatz von 25 g einer Emulsion eines Copolymeren aus 96 Teilen Ethylacrylat und 4 Teilen Methacrylsäureamid mit einem Feststoffgehalt von 10 Gew.-% agglomeriert, wobei ein Polybutadienlatex mit einer mittleren Teilchengröße von 350 nm gebildet wurde.

2. Herstellung der teilchenförmigen Pfropfpolymerisate
2100 g der nach obiger Vorschrift (1a) hergestellten Emulsion wurden mit 1150 g Wasser und 2,7 g Kaliumperoxodisulfat gemischt und unter Rühren auf 65 °C erwärmt. Nach Erreichen der Reaktionstemperatur wurden im Lauf von 3 Stunden 560 g des in Tabelle 1 für die Herstellung der Pfropfhülle B angegebenen Monomerengemisches zudosiert. Nach Beendigung der Zugabe wurde die Emulsion noch 2 Stunden bei 65°C gehalten. Das Pfropfpolymerisat wurde mittels Calciumchloridlösung bei 95°C aus der Emulsion gefällt, mit Wasser gewaschen und im warmen Luftstrom getrocknet.
Nach Zusetzen von 400 g Wasser, 4 g Na-C₁₄-Alkylsulfonat und 2 g Kaliumperoxodisulfat zu der nach obiger Vorschrift (1b) hergestellten Pfropfgrundlage wurden 400 g der Mischung der Pfropfmonomeren in den in Tabelle 2 angegebenen Verhältnissen innerhalb von 4 Stunden zugeführt. Die Polymerisation erfolgte unter Rühren des Ansatzes bei 75°C. Der Umsatz, bezogen auf Styril-Acrylnitril ist praktisch quantitativ. Die erhaltene Pfropfkautschukdispersion wurde mittels Magnesiumsulfatlösung gefällt und das abgetrennte Pfropfmischpolymerisat mit destilliertem Wasser gewaschen und getrocknet.
3. Mischung mit Hartkomponente (Matrix)
Zur Herstellung der Mischungen wurde als Hartkomponente ein Styrol/Acrylnitril-Copolymerisat mit einem Acrylnitril-Gehalt von 35 % und einer Viskositätszahl von 80 ml/g verwendet. Das gefällte und getrocknete Pfropfmischpolymerisat aus (2) wurde auf einem Extruder bei 260 °C mit jeweils soviel Material der Hartkomponente gemischt, daß das resultierende Gemisch einen Pfropfpolymerisatanteil von 50 bzw. 46 % aufwies. Aus diesem Gemisch wurden durch Spritzguß Formteile hergestellt.

**Tabelle 1**

| Pfropfgrundlage A¹⁾ | | | | Pfropfhülle B²⁾ | | | | Kerbschlagzähigkeit | Glanz³⁾ |
|---|---|---|---|---|---|---|---|---|---|
| | BA | DCPA | MAS | S | AN | DMAEA | | [kJ/m²] | |
| 1 | 97 | 1 | 2 | 73 | 23 | 3 | 1 HEA | 28 | 6 |
| 2 | 97 | 1 | 2 | 73 | 23 | 3 | 1 BDA1 | 29 | 7 |
| V⁴⁾ | 97 | 1 | 2 | 73 | 24 | 3 | - | 25 | 10 |

| | | | | | | | | | |
|---|---|---|---|---|---|---|---|---|---|
| ¹⁾ Zusammensetzung des zur Herstellung der Pfropfgrundlage A verwendeten Monomerengemisches | | | | | | | | | |
| ²⁾ Zusammensetzung des zur Herstellung der Pfropfhülle B verwendeten Monomerengemisches | | | | | | | | | |
| ³⁾ 45° Glanz | | | | | | | | | |
| ⁴⁾ Vergleichsversuch entsprechend dem Stand der Technik | | | | | | | | | |

- BA =: Butylacrylat
- BDA1 =: 4-Hydroxybutylacrylat
- DCPA =: Acrylsäureester des Tricyclodecenylalkohols
- DMAEA =: Dimethylaminoethylacrylat
- HEA =: 2-Hydroxyethylacrylat
- S =: Styrol
- AN =: Acrylnitril
- MAS =: Methacrylsäure

**Tabelle 2**

| Pfropfgrundlage A¹⁾ | | | Pfropfhülle B²⁾ | | | | Kerbschlagzähigkeit | Glanz³⁾ |
|---|---|---|---|---|---|---|---|---|
| | BU | MAS | S | AN | DMAEA | | [kJ/m²] | |
| 2 | 99 | 1 | 68 | 30 | 1 | 1 HEA | 21 | 12 |
| 3 | 99 | 1 | 68 | 30 | 1 | 1 BDA1 | 22 | 10 |
| V⁴⁾ | 99 | 1 | 69 | 30 | 1 | - | 18 | 8 |

| | | | | | | | | |
|---|---|---|---|---|---|---|---|---|
| ¹⁾ Zusammensetzung des zur Herstellung der Pfropfgrundlage A verwendeten Monomerengemisches | | | | | | | | |
| ²⁾ Zusammensetzung des zur Herstellung der Pfropfgrundlage B verwendeten Monomerengemisches | | | | | | | | |
| ³⁾ 45° Glanz | | | | | | | | |
| ⁴⁾ Vergleichsversuch entsprechend dem Stand der Technik | | | | | | | | |

- BU =: Butadien
- BDA1 =: 4-Hydroxybutylacrylat
- DMAEA =: Dimethylaminoethylacrylat
- HEA =: 2-Hydroxyethylacrylat
- S =: Styrol
- AN =: Acrylnitril
- MAS =: Methacrylsäure

## Patentansprüche

1. Teilchenförmiges Pfropfpolymerisat aus einer Pfropfgrundlage A aus, bezogen auf A,
A11: 75 bis 99.8 Gew.-% mindestens eines Alkylacrylats A11 mit 1-8 C-Atomen im Alkylrest,
A12: 0,1 bis 5 Gew.-% mindestens eines polyfunktionellen, vernetzend wirkenden Monomeren A12,
A13: 0,1 bis 20 Gew.-% mindestens eines eine oder mehrere saure Gruppen enthaltenden Monomeren A13
oder
A111: mindestens 50 Gew.-% eines oder mehrerer Diene A111,
A112: bis zu 50 Gew.-% mindestens eines weiteren ethylenisch ungesättigten Monomeren A112,
A113: bis zu 15 Gew.-% mindestens eines eine oder mehrere saure Gruppen enthaltenden Monomeren A113
und einer darauf gepfropften Pfropfhülle B aus, bezogen auf B,
B1: 0 bis 99,8 Gew.-% mindestens eines vinylaromatischen Monomeren B1,
B2: 0 bis 99,8 Gew.-% mindestens eines polaren, copolymerisierbaren, ethylenisch ungesättigten Monomeren B2,
B3: 0,1 bis 20 Gew-% mindestens eines eine oder mehrere basische Gruppen enthaltenden Monomeren B3 und
B4: 0,1 bis 20 Gew.-% mindestens eines Hydroxyalkylacrylats oder -methacrylats B4.

## Claims

1. A particulate graft copolymer comprising a grafting base A of, based on A,
A11: from 75 to 99.8 % by weight of at least one alkyl acrylate A11 having 1-8 carbon atoms in the alkyl radical,
A12: from 0.1 to 5 % by weight of at least one polyfunctional, crosslinking monomer A12,
A13: from 0.1 to 20 % by weight of at least one monomer A13 having one or more acidic groups
or
A111: at least 50 % by weight of one or more dienes A111,
A112: up to 50 % by weight of at least one further ethylenically unsaturated monomer A112,
A113: up to 15 % by weight of at least one monomer A113 having one or more acidic groups
and a graft sheath B grafted thereon, comprising, based on B,
B1: from 0 to 99.8 % by weight of at least one aromatic vinyl monomer B1,
B2: from 0 to 99.8 % by weight of at least one polar, copolymerizable, ethylenically unsaturated monomer B2,
B3: from 0.1 to 20 % by weight of at least one monomer B3 having one or more basic groups, and
B4: from 0.1 to 20 % by weight of at least one hydroxyalkyl acrylate or hydroxyalkyl methacrylate B4.

## Revendications

1. Polymère greffé particulaire formé d'une base de greffage A, constituée de, par rapport à A,
A11 : 75 à 99,8 % en poids d'au moins un acrylate d'alkyle A11 avec 1 à 8 atomes de carbone dans le résidu alkyle,
A12: 0,1 à 5 % en poids d'au moins un monomère A12 polyfonctionnel à action réticulante,
A13 : 0,1 à 20 % en poids d'au moins un monomère A13 contenant un ou plusieurs groupes acides
ou
A111 : au moins 50 % en poids d'un ou de plusieurs diènes A111,
A112 : jusqu'à 50 % en poids d'au moins un monomère A112 éthyléniquement insaturé supplémentaire,
A113 : jusqu'à 15 % en poids d'au moins un monomère A113 contenant un ou plusieurs groupes acides
et d'une enveloppe de greffage B greffée sur celle-ci, constituée de, par rapport à B,
B1: 0 à 99,8 % en poids d'au moins un monomère vinylaromatique B1,
B2: 0 à 99,8 % en poids d'au moins un monomère B2 polaire, copolymérisable et éthyléniquement insaturé,
B3: 0,1 à 20 % en poids d'au moins un monomère B3 contenant un ou plusieurs groupes basiques et
B4: 0,1 à 20 % en poids d'au moins un acrylate ou méthacrylate d'hydroxyalkyle B4.
